(19) Europäisches Patentamt
European Patent Office
Office européen des brevets

(11) **EP 3 308 007 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(51) Int Cl.:
*F02D 41/00* *(2006.01)*   *F02D 41/14* *(2006.01)*
*F02D 41/18* *(2006.01)*   *F02D 13/02* *(2006.01)*

(21) Anmeldenummer: **16726119.7**

(22) Anmeldetag: **01.06.2016**

(86) Internationale Anmeldenummer:
**PCT/EP2016/062363**

(87) Internationale Veröffentlichungsnummer:
**WO 2016/198299 (15.12.2016 Gazette 2016/50)**

(54) **LUFTFÜLLUNGSBESTIMMUNG, MOTORSTEUERGERÄT UND VERBRENNUNGSKRAFTMASCHINE**

AIR CHARGE DETERMINATION, ENGINE CONTROL UNIT AND INTERNAL COMBUSTION ENGINE

DÉTERMINATION DU REMPLISSAGE D'AIR, DISPOSITIF DE COMMANDE DE MOTEUR ET MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2015 DE 102015210761**

(43) Veröffentlichungstag der Anmeldung:
**18.04.2018 Patentblatt 2018/16**

(73) Patentinhaber: **Volkswagen Aktiengesellschaft 38440 Wolfsburg (DE)**

(72) Erfinder:
• **MILLICH, Elmar**
  **10999 Berlin (DE)**
• **PETERSEN, Lars**
  **38536 Meinersen (DE)**
• **SHURKEWITSCH, Andre**
  **Perleberg 19348 (DE)**
• **VOGELSANG, Jan**
  **38106 Braunschweig (DE)**

(56) Entgegenhaltungen:
EP-A1- 1 715 163        DE-A1- 19 753 873
DE-A1-102004 041 708    DE-A1-102007 035 314
DE-A1-102008 042 819    DE-A1-102013 216 073

**Beschreibung**

Die vorliegende Erfindung betrifft ein Verfahren zum Bestimmen einer Luftmenge innerhalb eines Zylinders einer Verbrennungskraftmaschine, ein Motorsteuergerät, welches ausgebildet ist, das Verfahren auszuführen, und eine Verbrennungskraftmaschine, welche das Motorsteuergerät aufweist.

In einer Verbrennungskraftmaschine (VKM), z. B. ein Ottomotor, wird ein Gemisch aus Kraftstoff und Sauerstoff, der in der Umgebungsluft enthalten ist, in kontrollierter Weise verbrannt. Um eine optimale Verbrennung zu ermöglichen, ist es vorteilhaft, die Kraftstoffmenge z. B. per Einspritzung auf eine Luftmenge, welche sich im Verbrennungsraum der VKM - insbesondere im Zylinder eines Ottomotors - befindet, abzustimmen.

Somit spielt insbesondere bei Ottomotoren (aber auch bei anderen VKM wie Dieselmotoren oder Gasturbinen) eine möglichst genaue Erfassung der im Betrieb vorliegenden Zylinderluftfüllung (d. h. der Luftmenge, welche in dem Zylinder vor Zündung bzw. vor Zufuhr von Kraftstoff enthalten ist) eine wichtige Rolle. So kann basierend auf der Zylinderluftfüllung eine entsprechende Kraftstoffmenge bzw. Kraftstoffmasse in den Zylinderinnenraum zugeführt werden, so dass insbesondere ein stöchiometrisches Verbrennungsluftverhältnis bei der Zylinderluftfüllung (bzw. Zylindersauerstofffüllung) einstellbar ist. Damit kann z. B. ein gewünschter $\lambda$-Wert von 1 (oder ein anderer) erreicht werden, um insbesondere die Emission von Abgasschadstoffen zu minimieren, die Verbrennung oder die Leistung zu optimieren.

Konventionell kann die Zylinderluftfüllung in der Regel aus einem gemessenen oder modellierten Saugrohrdruck (auch Ladedruck genannt, welcher dem Druck der dem Zylinder zugeführten Luft entspricht), Abgasgegendruck (auch Abgasdruck genannt, welcher den Druck des Abgases in einem Abgasrohr repräsentiert) und Modellen für einen Restgasanteil im Zylinder berechnet werden.

Es gibt Berechnungsalgorithmen, bei denen auch die aktuellen Positionen von füllungsbeeinflussenden Aktuatoren (z. B. Einlass- und Auslassnockenwellen, Ladungsbewegungsklappen, Ventilhübe und anderes) eingehen, sowie Ansaugluft- und Abgastemperaturen. Ungenauigkeiten der Modelle können dadurch korrigiert werden, dass anhand von umfangreichen, zeitaufwändigen Motor-Prüfstandsmessungen Korrekturfelder der entsprechenden Motorsteuersoftware bedatet werden. Auch Umgebungsfaktoren wie Druck und Temperatur können Einfluss auf die tatsächliche und die berechnete Zylinderluftfüllung haben.

Da die oben erwähnte Bedatung der Korrekturfelder in der Regel am Prüfstand unter Normbedingungen bzgl. Druck und Temperatur erfolgt (z. B. bei 1013 mbar und 21 °C), kann es beim Betrieb des Fahrzeuges unter anderen Umgebungsdruckbedingungen (z. B. bei Betrieb bei verschiedenen Höhen über Normalnull) zu erheblichen Abweichungen zwischen berechneter und tatsächlicher Zylinderluftmenge kommen.

Dies kann über zusätzliche Korrekturkennfelder in der Motorsteuersoftware berücksichtigt werden, die während Erprobungen der Fahrzeuge bei unterschiedlichen Umgebungsdrücken angepasst werden. Vor allem bei aufgeladenen Motoren mit einer Abgasturbine (welche Zufuhrluft zum Zuführen in den Zylinder vorkomprimiert) können starken Oszillationen im Abgasdruck vor der Turbine über das Arbeitsspiel vorkommen. Der gemittelte Abgasdruck, der über den Restgasgehalt im Zylinder in die Berechnung der Zylinderluftmenge eingeht, ist daher oft nicht ausreichend zur exakten Berechnung der Zylinderluftfüllung, und es sind noch weitere Größen wie der gemessene oder modellierte Abgasdruck hinter der Turbine zur Bestimmung der Zylinderluftfüllung erforderlich.

Die Grundbedatung der Luftfüllungserfassung unter Normumgebungsbedingungen am Motorprüfstand kann systematisch über alle Betriebspunkte und füllungsrelevanten Aktuatorpositionen erfolgen. Für umgebungsdruckbedingt notwendige Bedatungskorrekturen bei Fahrzeugerprobungen wird meist nur ein geringer Teil der fahrbaren Betriebspunkte erfasst. Abweichungen zwischen realer und berechneter Zylinderluftfüllung sind daher im Serienbetrieb nicht völlig vermeidbar. Die üblichen Bedatungskorrekturen unter verschiedenen Umgebungsdruckbedingungen sind zudem oft zeit- und kostenaufwändig.

DE 10 2004 030 604 B3 offenbart ein Verfahren zur Bestimmung der Luftmasse in einem Zylinder einer Brennkraftmaschine mit einer Aufladevorrichtung und einer Einrichtung zur variablen Ansteuerung der Ventilüberschneidung der Gaswechselventile. Dabei beschreibt eine Referenzkennlinie für die Luftmasse im Zylinder abhängig von den Betriebsbedingungen einen linearen Zusammenhang zwischen Luftmasse im Zylinder und dem Druck im Ansaugrohr. Falls der Saugrohrdruck den Abgasgegendruck übersteigt, wird der Wert der Luftmasse aus der Referenzkennlinie mit einem Wert für den Fanggrad korrigiert, der als Kennlinie abhängig von Betriebsbedingungen über dem Druck im Ansaugtrakt definiert ist.

DE 10 2007 012 340 B3 offenbart ein Verfahren zum Ermitteln und Einregeln des Luftmassenstroms im Saugrohr eines Verbrennungsmotors. Dabei wird ein Modellluftmassenstrom modelliert und mit mindestens einem durch Messung im Luftansaugtrakt vor dem Saugrohr bestimmten Luftmassenstrom abgeglichen. Und zwar dadurch, dass die Regelabweichung zwischen dem Modellluftmassenstrom und dem durch Messung bestimmten Luftmassenstrom in einem einzigen Abgleichszweig mit Hilfe einer generalisierten Adaption beaufschlagt wird, die lediglich ein Zeitverhalten beinhaltet, wie schnell eine Regelabweichung zwischen dem Modellluftmassenstrom und dem durch Messung bestimmten Luftmassenstrom ausgeglichen werden soll. Ferner wird eine Adaptionszielgröße erzeugt, und mittels einer nachfolgenden Adaptionswerttransformation im selben Abgleichszweig auf eine physikalische Größe des Ansaugrohrs transformiert.

DE 10 2007 012 506 A1 offenbart ein Verfahren zum Ermitteln und Einregeln des Luftmassenstroms im Ansaugrohr eines Verbrennungsmotors, wobei ein Luftmassenstrommodell einen Modellluftmassenstrom durch die Drosselvorrichtung des Saugrohrs modelliert, wobei der Luftmassenstrom von in den Luftansaugtrakt einströmender Frischluft mittels eines Sensors vor der Drosselvorrichtung gemessen wird, wobei der gemessene Luftmassenstrom in einen fiktiv am Ort der Drosselvorrichtung gemessenen Luftmassenstrom transformiert wird und dieser umgerechnete Luftmassenstrom mit dem Modellluftmassenstrom durch die Drosselvorrichtung verglichen wird.

DE 10 2008 042 819 A1 zeigt ein Verfahren zum Bestimmen einer gesamten Zylinderfüllung, bei der die Zylinderfüllung abhängig von einer Summe der dem Saugrohr zugeführten Gasmassenströmen und abhängig von einem Dynamikkorrekturfaktor, der das dynamische Verhalten des Saugrohr bezüglich des sich dort einstellenden Saugrohrdrucks beschreibt, ermittelt.

DE 10 2004 041 708 A1 offenbart ein Verfahren zur modellbasierten Bestimmung der in die Zylinderbrennkammer einströmenden Gesamtfrischluftmasse mittels zweier Lastteilmodelle, die ein lineares Verhalten und ein nicht lineares Verhalten der einströmenden Teilluftmassen berücksichtigen.

Bekannte Verfahren und Vorrichtungen zur Bestimmung einer Zylinderluftfüllung sind entweder sehr aufwändig in der erforderlichen Ausstattung, zeitaufwändig und/oder kostenaufwändig oder bieten nicht immer unter allen Betriebsbedingungen eine gewünschte Genauigkeit und/oder Zuverlässigkeit.

Eine Aufgabe der vorliegenden Erfindung ist es somit, ein Verfahren zum Bestimmen einer Luftmenge innerhalb eines Zylinders einer Verbrennungskraftmaschine vorzuschlagen, welches die oben genannten Probleme im Stand der Technik zumindest teilweise überwindet oder behebt.

Ferner ist es eine Aufgabe der vorliegenden Erfindung, ein Motorsteuergerät und auch eine Verbrennungskraftmaschine mit einem derartigen Motorsteuergerät bereitzustellen, welches in der Lage ist, eine Zylinderluftfüllung in zuverlässiger und hinreichend genauer Weise unter verträglichem Zeit- und Kostenaufwand zu bestimmen.

Diese Aufgabe wird durch das erfindungsgemäße Verfahren zum Bestimmen einer Luftmenge innerhalb eines Zylinders einer Verbrennungskraftmaschine gemäß Anspruch 1, durch das Motorsteuergerät gemäß Anspruch 14 und die Verbrennungskraftmaschine gemäß Anspruch 15 gelöst.

Weitere besondere Ausführungsformen und vorteilhafte Ausgestaltungen der Erfindung sind in den abhängigen Ansprüchen spezifiziert und werden in der unten folgenden detaillierten Beschreibung bevorzugter Ausführungsformen der vorliegenden Erfindung erläutert.

Ein erfindungsgemäßes Verfahren zum Bestimmen einer Luftmenge (insbesondere Luftmasse, Anzahl von Luftteilchen oder ähnliches, insbesondere Sauerstoffmenge, Sauerstoffmasse bzw. Anzahl von Sauerstoffteilchen) innerhalb eines Zylinders (bzw. innerhalb mehrerer Zylinder, welche mit Frischluft und Kraftstoff befüllt und gezündet werden) einer Verbrennungskraftmaschine (z.B. Ottomotor, Benzinmotor, Dieselmotor) weist dabei ein Skalieren eines Saugrohrdrucks (Druck der dem Zylinder zugeführten Luft, auch Ladedruck genannt) und eines Abgasdrucks (Druck des aus dem Zylinder ausströmenden Abgases nach Verbrennung) in Abhängigkeit eines tatsächlichen Umgebungsluftdrucks (insbesondere Atmosphärendrucks, welcher in der Umgebung der Verbrennungskraftmaschine vorherrscht) und eines Normumgebungsluftdrucks (z. B. ein Luftdruck von 1013 mbar, insbesondere bei Vorliegen einer Normtemperatur, z. B. 21 °C) auf.

Ferner ist das Durchführen einer Luftfüllungsberechnungsalgorithmik vorgesehen, welche unter einer Normumgebungsluftdruck-Betriebsbedingung (z. B. einer Betriebsbedingung, bei der ein Druck von 1013 mbar vorherrscht und z. B. eine Temperatur von 21 °C vorherrscht) erstellt ist, um eine Normluftmenge (insbesondere eine Luftmenge, welche bei Vorliegen der Normumgebungsluftdruck-Betriebsbedingung als in dem Zylinder befindlich bestimmt würde) basierend auf dem skalierten Saugrohrdruck (welcher durch Skalieren des Saugrohrdrucks erhalten ist) und dem skalierten Abgasdruck (welcher durch Skalieren des Abgasdrucks erhalten ist) zu bestimmen.

Schließlich ist ein Skalieren der Normluftmenge in Abhängigkeit des tatsächlichen Umgebungsluftdrucks und des Normumgebungsluftdruck vorgesehen, um die Luftmenge, welche sich innerhalb des Zylinders befindet, zu berechnen.

Das Verfahren kann z. B. in einem Motorsteuergerät der Verbrennungskraftmaschine durchgeführt werden, insbesondere in einem (Software)-Modul des Motorsteuergeräts. Das Verfahren kann als ein Computer-implementiertes Verfahren ausgebildet sein. Das Verfahren kann z. B. zum Ablaufen in das Motorsteuergerät einprogrammiert werden. Dazu kann das Motorsteuergerät auf einen Speicher zugreifen, welcher Anweisungen enthält, welche ausgebildet sind, das Verfahren zum Bestimmen der Luftmenge durchzuführen.

Der Saugrohrdruck (auch Ladedruck genannt) und/oder der Abgasdruck kann durch Messung mittels geeigneter Sensoren ermittelt worden sein oder teilweise auch durch Modellieren bestimmt worden sein.

Der Saugrohrdruck und der Abgasdruck können Eingabegrößen für das Verfahren darstellen.

Ferner kann auch der Umgebungsluftdruck eine Eingabegröße für das Verfahren darstellen.

Die Skalierung des Saugrohrdrucks und des Abgasdrucks können verschieden oder gleich ausgeführt werden.

Das Skalieren der Normluftmenge kann verschieden oder gleich von dem Skalieren des Saugrohrdrucks und/oder des Abgasdrucks vorgenommen werden.

Der Umgebungsluftdruck kann gemessen oder auch teilweise modelliert sein.

Die Luftfüllungsberechnungsalgorithmik kann in einem herkömmlichen Motorsteuergerät durchführbar sein.

Die Luftfüllungsberechnungsalgorithmik kann aus physikalisch/heuristischen Modellen unter Zuhilfenahme von Kennlinien und unter Verwendung von experimentell bestimmten Daten erstellt worden sein. Dabei kann von Standardbedingungen bzw. Normbedingungen, insbesondere einer Temperatur von 21 °C und einem Umgebungsluftdruck von 1013 mbar ausgegangen werden. Unter diesen Bedingungen kann die Verbrennungskraftmaschine hinsichtlich einer innerhalb des Zylinders befindlichen Luftmenge (insbesondere bei geschlossenem Einlassventil) und in Abhängigkeit von variierendem Saugrohrdruck und Abgasdruck vermessen worden sein.

Als ein Ergebnis kann die Luftfüllungsberechnungsalgorithmik, bei Eingabe eines Saugrohrdrucks und eines Abgasdrucks, eine Normluftmenge ergeben, welche bei Vorliegen der Normumgebungsluftdruck-Betriebsbedingung innerhalb des Zylinders enthalten wäre.

Das Verfahren kann insbesondere die bei geschlossenem Lufteinlassventil im Zylinder befindliche Luftmenge bestimmen. Die bei geschlossenem Lufteinlassventil im Zylinder befindliche Luftmenge ist diejenige Luftmenge, welche in einer Mischung mit einem später zugefügten Kraftstoff schließlich gezündet wird. Damit ist die zu diesem Zeitpunkt im Zylinder befindliche Luftmenge die zur Optimierung der Verbrennung relevante Luftmenge.

Mit Hilfe der vorliegenden Erfindung kann eine konventionell vorhandene Luftfüllungsberechnungsalgorithmik verwendet werden, um eine Luftmenge bei einem Umgebungsluftdruck zu bestimmen, welcher von dem Normumgebungsluftdruck abweicht. Dazu wird lediglich der Saugrohrdruck und der Abgasdruck in Abhängigkeit des tatsächlichen Umgebungsluftdrucks und des Normumgebungsluftdrucks skaliert, die skalierten Größen werden in die Luftfüllungsberechnungsalgorithmik eingegeben, und die von der Luftbefüllungsberechnungsalgorithmik ausgegebene Luftmenge wird, wiederum in Abhängigkeit des tatsächlichen Umgebungsluftdrucks und des Normumgebungsluftdrucks, skaliert, um schließlich die Luftmenge zu berechnen, welche sich bei dem tatsächlichen Umgebungsluftdruck im Zylinder befindet.

Damit kann eine zuverlässige, hinreichend genaue, sowie kosten- und zeit-vorteilhafte Modellierung und Bestimmung der Luftmenge erreicht werden.

Das Skalieren des Saugrohrdrucks, des Abgasdrucks und der Normluftmenge kann ein lineares Skalieren aufweisen (insbesondere ein Multiplizieren mit einem konstanten oder variablen Faktor). Damit kann das Verfahren weiter vereinfacht werden, insbesondere kann ein Speicherbedarf vermindert sein.

Das Skalieren des Saugrohrdrucks und des Abgasdrucks kann einheitlich erfolgen. Insbesondere kann das Skalieren des Saugrohrdrucks und des Abgasdrucks durch Anwenden einer gleichen Funktion auf den Saugrohrdruck und den Abgasdruck durchgeführt werden. Die Funktion kann z.B. eine nicht-lineare Funktion oder eine lineare Funktion umfassen. Durch die einheitliche Skalierung kann das Verfahren weiter vereinfacht werden.

Das Skalieren des Saugrohrdrucks kann ein Multiplizieren des Saugrohrdrucks mit einem Faktor aufweisen, wobei der Faktor den Quotienten (oder einem Kehrwert davon) aus dem Normumgebungsluftdruck und dem tatsächlichen Umgebungsluftdruck aufweist. Ein Multiplizieren kann einfach und schnell durchgeführt werden. Auch der Quotient aus dem Normumgebungsluftdruck und dem tatsächlichen Umgebungsluftdruck kann auf einfache Weise berechnet werden.

Ferner kann das Skalieren der Normluftmenge ein Multiplizieren der Normluftmenge mit dem Kehrwert des Faktors aufweisen. Damit kann das Verfahren weiter vereinfacht werden, da ein Umtransformieren der verschiedenen Größen lediglich aus einem einzigen Faktor abgeleitet werden kann.

Die Luftfüllungsberechnungsalgorithmik kann eine oder mehrere weitere Eingangsgrößen aufweisen, insbesondere Positionen (bzw. Einstellungen) von füllungsbeeinflussenden Aktuatoren und/oder eine Drehzahl der Verbrennungskraftmaschine und/oder eine Einlassnockenposition und/oder eine Auslassnockenposition und/oder eine Ladungsbewegungsklappenposition und/oder mindestens einen Ventilhub und/oder eine Abgastemperatur und/oder eine Luftzufuhrtemperatur (bzw. Ladetemperatur) und/oder einen gemessenen oder modellierten Abgasdruck stromaufwärts einer Turbine und/oder eine Umgebungstemperatur.

Gemäß einer Ausführungsform umfassen die weiteren Eingangsgrößen insbesondere zumindest eine Drehzahl der Verbrennungskraftmaschine, eine Einlassnockenposition und eine Auslassnockenposition. Diese Eingangsgrößen können herkömmlich bestimmt bzw. modelliert sein, so dass keine besondere Messvorrichtung zum Durchführen des Verfahrens erforderlich sein muss.

Die Luftbefüllungsberechnungsalgorithmik kann eine Anzahl von Kennlinien bzw. Tabellen und/oder Modellfunktionen umfassen.

Die Luftfüllungsberechnungsalgorithmik kann rein heuristisch und/oder auf physikalisch/technischen Modellen basierend erstellt sein.

In einem herkömmlichen Motorsteuergerät kann die Luftfüllungsberechnungsalgorithmik aus einem eingegebenen Saugrohrdruck und einem eingegebenen Abgasdruck die Luftmenge im Zylinder bestimmen, die bei Vorliegen eines Normumgebungsluftdrucks im Zylinder vorhanden wäre.

Das erfindungsgemäße Verfahren kann eine Phase (zeitliche Phase) gleichzeitiger Öffnung eines Einlassventils (welches Luft in den Zylinder einzuführen ermöglicht) und eines Auslassventils (welches Abgas aus dem Zylinder abzuführen ermöglicht) des Zylinders unterstützen. Während der Phase gleichzeitiger Öffnung des Einlassventils und des Auslassventils strömt einerseits ein Teil des nach der Verbrennung im Zylinder befindlichen Abgases aus dem Zylinder (insbesondere in ein Abgasrohr) und tritt andererseits bereits Luft (aus einem Saugrohr bzw. Laderohr) in den Zylinder ein.

So eine Betriebsphase erschwert die Bestimmung der Luftmenge innerhalb des Zylinders, wenn das Einlassventil danach wieder geschlossen ist. Die Skalierung bzw. Transformation der relevanten Größen Saugrohrdruck, Abgasdruck und Luftmenge kann jedoch auch bei Motorsteuerungen eingesetzt werden, die eine Phase gleichzeitiger Öffnung eines Einlassventils und eines Auslassventils aufweisen. Damit kann das Verfahren in flexibler Weise auf eine große Anzahl von Motorbetriebsverfahren angewendet und eingesetzt werden.

Ferner kann das Verfahren auch eine Restgasrückführung unterstützen. Ein Teil der während der gleichzeitigen Öffnung von Einlassventil und Auslassventil in den Zylinder strömenden Luft kann in das Abgasrohr eintreten, jedoch im weiteren Verlauf des Ansaugtrakts wieder in den Zylinder zurückgeholt werden. Auch dieser Betriebsmodus kann eine Berechnung der Luftmenge verkomplizieren. Das Verfahren kann jedoch, wie aus der physikalischen Analyse weiter unten erläutert ist, auch auf diese Verbrennungskraftmaschinensteuerung bzw. - bedingung angewendet werden. Somit kann das Verfahren auf eine Vielzahl von Betriebsverfahren von Verbrennungskraftmaschinen angewendet werden.

Die Luftbefüllungsberechnungsalgorithmik kann am Verbrennungskraftmaschinenprüfstand unter Norm(al)bedingungen, insbesondere bei Normtemperatur (z. B. 21 °C) und Normumgebungsdruck (z.B. 1013 mbar), über eine Mehrzahl von Betriebspunkten und füllungsbeeinflussenden Aktuatorpositionen erstellt werden. Dazu kann eine Vielzahl von Messungen (insbesondere von Saugrohrdruck, Abgasdruck und Luftmenge) vorgenommen werden. Damit können konventionelle Verfahren zur Bedatung von Motorgerät-relevanten Algorithmen angewendet oder eingesetzt werden.

Der Saugrohrdruck und der Abgasdruck können jeweils mittels Druckmessungen und/oder Modellierungen, insbesondere mittels Mittelung von Druckmessungen und/oder Modellierungen, in einem Saugrohr bzw. in einem Abgasrohr bestimmt werden. Dies kann insbesondere bei geöffnetem Lufteinlassventil und/oder geöffnetem Abgasauslassventil des Zylinders geschehen. Derartige Druckmessungen können in herkömmlichen Verbrennungskraftmaschinen mittels geeignete Sensoren durchgeführt werden, auch ohne die Ausstattung der Verbrennungskraftmaschine zu verändern. Damit ist das Verfahren auch für herkömmliche Verbrennungskraftmaschinen geeignet.

Der tatsächliche Umgebungsluftdruck kann mittels Druckmessung und/oder Höhenmessung und/oder anhand von ggf. auch entfernt bestimmten meteorologischen Daten erhalten bzw. bestimmt werden. Damit diese Eingangsgröße flexibel bestimmt werden.

Ferner wird die Aufgabe durch ein Verfahren zum Steuern einer Verbrennungskraftmaschine mit mindestens einem Zylinder gelöst, wobei während des Steuerverfahrens ein Verfahren zum Bestimmen einer Luftmenge innerhalb des Zylinders gemäß einer der hier angegebenen Ausführungsformen durchgeführt wird.

Ferner wird während des Steuerverfahrens Kraftstoff in den Zylinder eingebracht, wobei eine Kraftstoffmenge (z.B. Masse, Anzahl von Teilchen) basierend auf der bestimmten Luftmenge (z.B. Masse, Anzahl von Teilchen, insbesondere des Sauerstoffs) gewählt ist, insbesondere derart, dass ein stöchiometrisches Verhältnis zwischen Kraftstoff und der Luftmenge bzw. der Sauerstoffmenge (z.B. gemäß einer Reaktionsgleichung), innerhalb des Zylinders erreicht wird.

Ein erfindungsgemäßes Motorsteuergerät weist ein Eingabemodul und einen Prozessor (z. B. Hardware und/oder Software umfassend) auf. Das Eingabemodul ist ausgebildet, zumindest einen Saugrohrdruck und einen Abgasdruck eines Zylinders einer Verbrennungskraftmaschine und einen tatsächlichen Umgebungsluftdruck zu erhalten bzw. innerhalb des Motorsteuergeräts verfügbar zu machen. Der Prozessor ist ausgebildet, den Saugrohrdruck und den Abgasdruck in Abhängigkeit des tatsächlichen Umgebungsluftdrucks und eines Normumgebungsluftdrucks zu skalieren, eine Luftbefüllungsberechnungsalgorithmik durchzuführen, welcher unter einer Normumgebungsluftdruck-Betriebsbedingung erstellt ist, um eine Normluftmenge basierend auf dem skalierten dem Saugrohrdruck (Luftzufuhrdruck) und dem skalierten Abgasdruck zu bestimmen. Der Prozessor ist ferner ausgebildet, die Normluftmenge in Abhängigkeit des tatsächlichen Umgebungsluftdrucks und des Normumgebungsluftdrucks zu skalieren, um eine Luftmenge innerhalb des Zylinders zu bestimmen. Schließlich ist der Prozessor ausgebildet, eine in den Zylinder einzuführende Kraftstoffmenge basierend auf der bestimmten Luftmenge zu bestimmen (insbesondere basierend auf einer Sauerstoffmenge der bestimmten Luftmenge zu bestimmen). Das Motorsteuergerät kann ausgebildet sein, ein Verfahren gemäß einer der vorangehenden Ausführungsformen auszuführen oder zu steuern.

Das Motorsteuergerät kann insbesondere ausgebildet sein, ein Verfahren zum Bestimmen einer Luftmenge innerhalb eines Zylinders einer Verbrennungskraftmaschine gemäß einer der angegebenen Ausführungsformen durchzuführen.

Eine erfindungsgemäße Verbrennungskraftmaschine (z.B. Ottomotor, Benzinmotor oder Dieselmotor und optional einen zusätzlichen Elektromotor umfassend) umfasst mindestens einen Zylinder mit einem Saugrohr und einem Abgasrohr und ein Motorsteuergerät gemäß einer der angegebenen Ausführungsformen. Dabei ist das Motorgerät ausgebildet, eine Luftmenge im Zylinder zu bestimmen, und basierend darauf eine Kraftstoffmenge zu bestimmen, welche schließlich zur Verbrennung zusammen mit der Luftmenge in den Zylinder einzuführen ist. Das Motorsteuergerät kann dazu z.B. eine Kraftstoffpumpe und ein Einlassventil steuern.

Ausführungsformen der vorliegenden Erfindung werden nun mit Bezug auf die beiliegenden Zeichnungen erläutert. Der Geltungsbereich der Ansprüche ist nicht auf die beschriebenen oder illustrierten Ausführungsformen beschränkt.

Fig. 1    zeigt schematisch ein Modul eines Motorsteuergeräts gemäß einer Ausführungsform der vorliegenden Erfindung, welches ausgebildet ist, ein Verfahren zum Bestimmen einer Luftmenge innerhalb eines Zylinders einer Verbrennungskraftmaschine gemäß einer Ausführungsform der vorliegenden Erfindung auszuführen, und

Fig. 2    illustriert einen Teil einer Verbrennungskraftmaschine gemäß einer Ausführungsform der vorliegenden Erfindung, welche ein Motorsteuergerät gemäß einer Ausführungsform der vorliegenden Erfindung umfasst.

Ausführungsformen der vorliegenden Erfindung sind auf ein Verfahren und eine Vorrichtung, insbesondere ein Motorsteuergerät, gerichtet, welche eine Zylinderluftfüllung bzw. eine Luftmenge innerhalb eines Zylinders zu bestimmen in der Lage sind. Die folgenden Gleichungen Gl.1 bis Gl.7 beschreiben physikalische Größen, welche zur Bestimmung der Luftmenge innerhalb des Zylinders von Bedeutung sind.

$$\text{Gl.1:} \quad mRG_{res} = \frac{p_3 * V_{AS}}{R_a * T_3}$$

$$\text{Gl.2:} \quad mRG_{Reasp} = C * A * p_3 * \sqrt{\frac{1}{T_3} * \psi\left(\frac{p_2}{p_3}\right)}$$

$$\text{Gl.3:} \quad mLSca = C * A * p_2 * \sqrt{\frac{1}{T_2} * \psi\left(\frac{p_3}{p_2}\right)}$$

$$\text{Gl.4:} \quad p_{RG} = \frac{(mRG_{Res} + mRG_{Reasp} - mLsca) * T_{zyl}}{R_a * V_{ES}}$$

$$\text{Gl.5:} \quad p_{zyl} = p2$$

$$\text{Gl.6:} \quad p_L = p_{zyl} - p_{RG}$$

$$\text{Gl.7:} \quad mL = \frac{p_L * V_{ES}}{R_a * T_{zyl}}$$

Dabei haben die in den Gleichungen Gl.1 bis Gl.7 vorkommenden Variablen die folgende Bedeutung:

| | |
|---|---|
| $mRG_{res}$: | Residuales Restgas |
| $mRG_{reasp}$: | Reaspiratives Restgas |
| $p_2$: | Saugrohrdruck |
| $mLsca$: | Scavenging Luftmasse |
| $p_3$: | Abgasdruck |
| $T_2$: | Temperatur Saugrohr |
| $T_3$: | Temperatur Abgas |
| $p_{zyl}$: | Zylinderdruck Einlassventil bei schließt |
| $T_{zyl}$: | Temperatur Zylinder bei Einlassventil schließt |
| $P_{RG}$: | Partialdruck Restgas |
| $p_L$: | Partialdruck Luft |
| $V_{AS}$: | Zylindervolumen bei Auslassventil schließt |
| $V_{ES}$: | Zylindervolumen bei Einlassventil schließt |
| $R_a$: | Spezifische Gaskonstante |
| $A$: | Effektive Fläche Ventilüberströmung |
| $C$: | Konstante |
| $mL$: | Luftmasse im Zylinder |
| $pu$: | Umgebungsdruck |

Gl.1 beschreibt die Restgasmenge als Funktion im Wesentlichen des Abgasdruckes $p_3$. Die korrekte Erfassung der Restgasmenge ist Voraussetzung für eine exakte Bestimmung der Zylinderluftfüllung; sie ist herkömmlicherweise aber einer direkten Messung durch eine Sensorik nicht zugänglich.

Das im Totvolumen verbleibende Restgas lässt sich aus dem entsprechenden Zylindervolumen $V_{AS}$, dem Abgasgegendruck $p_3$ und der Abgastemperatur $T_3$ gemäß Gl.1 berechnen. Bei dem im ottomotorischen Bereich gängigen Verfahren der internen Restgasrückführung bzw. Spülung der Restgasmenge durch Frischluft (Scavenging) fließt im oberen Totpunkt des Ansaugtrakts während der Überschneidungsphase der Öffnungszeiten von Einlass- und Auslassventil Restgas, bzw. Frischluft, zwischen Saugrohr- und Abgasvolumen durch den Zylinder. Die Menge des übergeströmten Restgases, das im weiteren Verlauf des Ansaugtrakts wieder in den Zylinder zurückgeholt wird, hängt im Wesentlichen vom Druckverhältnis zwischen Abgasdruck $p_3$ und dem Saugrohrdruck $p_2$ gemäß Gl.2 ab.

Analog gilt dies für die durch den Zylinder gespülte Frischluftmenge bei positivem Druckgefälle zwischen Saugrohrdruck und Abgasdruck (siehe Gl.3). Es lässt sich zeigen (Gl.4 bis Gl. 7), dass bei einheitlicher Skalierung von Saugrohrdruck $p_2$ und Abgasgegendruck $p_3$ auch die Zylinderluftfüllung mL im gleichen Ausmaß linear skaliert.

Werden z. B. Gl.1 bis Gl.7 statt in $p_2$, $p_3$ in $p'_2 = f * p_2$ und $p'_3 = s * p_3$ angeschrieben, so ergibt sich Gl. 7 zu: $mL' = f * m_L$. Somit skaliert die sich im Zylinder befindliche Luftmenge bei geschlossenem Einlassventil genauso wie der Saugrohrdruck $p_2$ und der Abgasdruck $p_3$.

Gl.1 beschreibt hier die Menge des Restgases bei geschlossenem Auslassventil. In Gl.2 und Gl.3 bezeichnet $\psi$ die Drosselausflussfunktion, welche gegeben ist als sqrt(k/(k-1)*($x^{2/k}$-$x^{k+1/k}$), wobei k der Adiabatenexponent ist. Gl. 5 geht von einer Näherung aus, dass bei Schließen des Einlassventils ein Druckgleichgewicht zwischen dem Druck im Saugrohr und dem Druck im Zylinder vorliegt.

Der Umstand, dass Saugrohrdruck, Abgasgegendruck und Zylinderluftfüllung in gleicher Weise linear skalieren, ist Grundlage eines vorgeschlagenen erfindungsgemäßen Verfahrens zur Bestimmung einer Luftmenge innerhalb eines Zylinders einer Verbrennungskraftmaschine.

Dabei korrigiert das Verfahren die berechnete Zylinderluftfüllung in Abhängigkeit von unterschiedlichen Umgebungsdrücken pu. Bei von den Normbedingungen, unter denen die Applikation der Korrekturfehler am Motorprüfstand erfolgte, abweichenden Umgebungsdrücken werden Saugrohrdruck $p_2$ und Abgasgegendruck $p_3$ auf den Wert transformiert, der in diesem Motorbetriebspunkt unter Normumgebungsdruckbedingungen herrschen würde. In diesem fiktiven Betriebspunkt wurde der Motor bereits vermessen und die Ergebnisse in den entsprechenden Korrekturfeldern der Motorsteuersoftware abgelegt. Anschließend erfolgt die lineare Rücktransformation der vom primären Modell unter Normbedingungen berechneten Zylinderluftfüllung mLnorm in diesem fiktiven Betrieb.

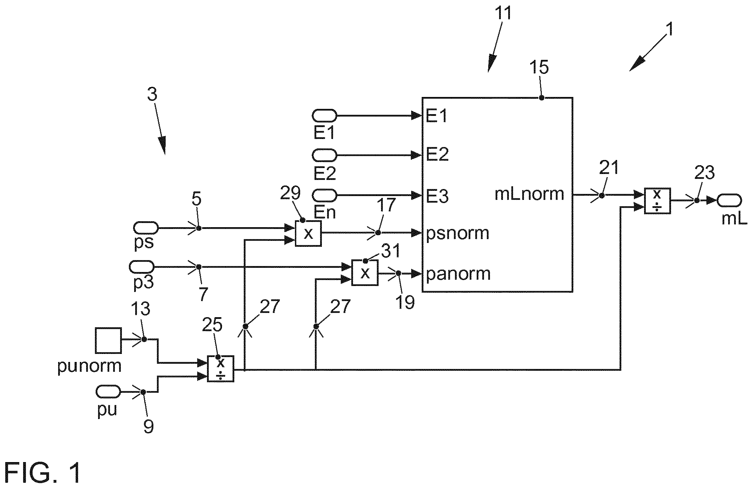

Fig. 1 zeigt in schematischer Darstellung ein Modul 1, welches ausgebildet ist, ein Verfahren zum Bestimmen einer Luftmenge innerhalb eines Zylinders gemäß einer Ausführungsform der vorliegenden Erfindung auszuführen, und welches z. B. in einem Motorsteuergerät gemäß einer Ausführungsform der vorliegenden Erfindung umfasst sein kann.

Das Modul 1 umfasst ein Eingabemodul 3, welches ausgebildet ist, zumindest einen Saugrohrdruck 5 (auch als ps bezeichnet) und einen Abgasdruck 7 (auch als $p_3$ bezeichnet) und einen tatsächlichen Umgebungsluftdruck 9 (auch als pu bezeichnet) zu erhalten.

Ferner umfasst das Modul 1 einen Prozessor 11, welcher ausgebildet ist, den Saugrohrdruck 5 und den Abgasdruck 7 in Abhängigkeit des tatsächlichen Umgebungsluftdrucks 9 und eines Normumgebungsluftdrucks 13 (auch punorm) zu skalieren, eine Luftbefüllungsberechnungsalgorithmik 15 durchzuführen, welche unter einer Normumgebungsluftdruck-Betriebsbedingung erstellt ist, um eine Normluftmenge (mLnorm) 21 basierend auf dem skalierten Saugrohrdruck 17 und dem skalierten Abgasdruck 19 zu bestimmen.

Der Prozessor 11 ist ferner ausgebildet, die Normluftmenge 21 (auch als mLnorm bezeichnet) in Abhängigkeit des tatsächlichen Umgebungsluftdrucks 9 und des Normumgebungsluftdrucks 13 zu skalieren, um eine Luftmenge 23 (auch als mL bezeichnet), die sich innerhalb des Zylinders befindet, zu bestimmen.

Mittels eines Berechnungselements 25 wird dazu ein Verhältnis zwischen dem Normumgebungsluftdruck 13 (auch als punorm bezeichnet) und dem tatsächlichen Umgebungsluftdruck 9 gebildet, wobei das Druckverhältnis durch Bezugsziffer 27 gekennzeichnet ist, welches einen Faktor f repräsentieren kann. Der Saugrohrdruck 5 wird mittels eines Multiplikationselementes 29 mit diesem Faktor 27 bzw. f multipliziert, um den skalierten Saugrohrdruck 17 zu erhalten. Auf gleiche Weise wird mittels eines Multiplikationselements 31 der Abgasdruck $p_3$ mit diesem Faktor 27 bzw. f multipliziert, um den skalierten Abgasdruck 19 zu erhalten.

Sowohl der skalierte Saugrohrdruck 17 als auch der skalierte Abgasdruck 19 sind Eingangsgrößen für die Luftbefüllungsberechnungsalgorithmik 15.

Weitere Eingangsgrößen sind durch E1, E2 und En bezeichnet und können z. B. eine Drehzahl der Verbrennungskraftmaschine, eine Einlassnockenposition und eine Auslassnockenposition oder auch andere Eingangsgrößen umfassen.

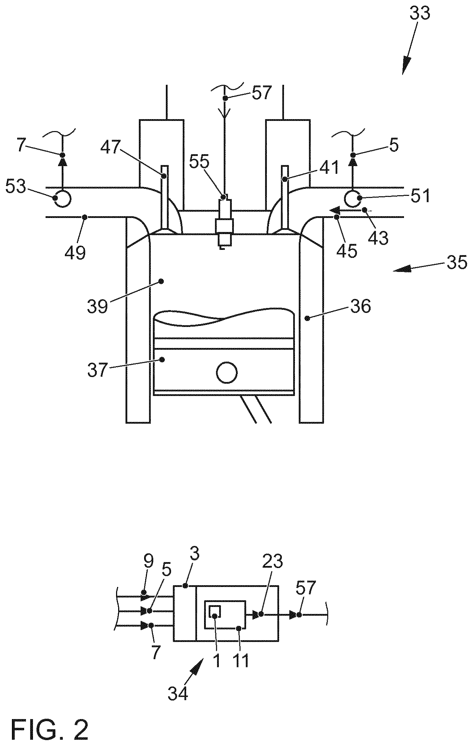

Fig. 2 illustriert in schematischer Darstellung einen Teil einer Verbrennungskraftmaschine 33 gemäß einer Ausführungsform der vorliegenden Erfindung, welche ein Motorsteuergerät 34 gemäß einer Ausführungsform der vorliegenden Erfindung umfasst, welches z. B. das Modul 1, welches in Fig. 1 illustriert ist, umfasst.

In einem Zylinder 35 ist ein Kolben 37 entlang einer Zylinderachse in einem Zylinderinnenraum 39 verschiebbar angeordnet, der im Betrieb (Verbrennung im Zylinderinnenraum 39) über ein Pleuel eine Kurbelwelle antreibt.

Der Zylinder 35 umfasst eine Zylinderwand 36, welche den Zylinderinnenraum 39 zusammen mit dem Kolben 37 begrenzt. Der Zylinder 35 umfasst ein Einlassventil 41, welches erlaubt, Luft 43 durch ein Saugrohr 45 in den Innenraum 39 des Zylinders einzuführen. Ferner umfasst der Zylinder 35 ein Auslassventil 47, welches erlaubt, Abgas aus dem Zylinderinnenraum 39 in ein Abgasrohr 49 zu leiten.

Ein Messfühler 51 misst den Saugrohrdruck 5 und leitet den Saugrohrdruck 5 an das Motorsteuergerät 34 weiter. Ein weiterer Drucksensor 53 in dem Abgasrohr 49 misst den Abgasdruck 7 und leitet ihn an das Motorsteuergerät 34 weiter. Ein in der Fig. 2 nicht dargestellter Drucksensor misst ferner den Umgebungsdruck 9 und führt ihn als Eingangsgröße dem Motorsteuergerät 34 zu. Ein Kraftstoffluftgemisch kann innerhalb des Zylinderinnenraums 39 mittels einer Zündkerze 55 oder optional ohne Zündkerze, z. B. durch Kompression, gezündet werden.

Das Motorsteuergerät 34 berechnet basierend auf dem Saugrohrdruck 5, dem Abgasdruck 7 und dem Umgebungsdruck 9 eine in dem Zylinder 35 nach Schließen des Einlassventils 41 befindliche Luftmenge 23 (mL) und verwendet diese bestimmte Luftmenge 23, um eine in den Zylinder 35 einzuführende Kraftstoffmenge zu berechnen.

Die Motorsteuerung 34 kann ein Einspritzsteuersignal 57 zur Steuerung einer Einspritzvorrichtung ausgeben. Eine derart berechnete Kraftstoffmenge wird über eine in Fig. 2 nicht dargestellte Einspritzapparatur in den Innenraum 39 des Zylinders 35 eingespritzt. Ausführungsformen der Erfindung können auf Verbrennungskraftmaschinen mit oder ohne Aufladung der Luft angewendet werden.

Das erfindungsgemäße Verfahren kann eine exakte Berechnung der Zylinderluftfüllung auch unter von Normbedingungen abweichenden Umgebungsdrücken ermöglichen.

Das Verfahren beruht dabei auf physikalischen Korrekturen, wie sie in den Gl.1 bis Gl.7 ersichtlich sind, und umfasst so alle fahrbaren Betriebspunkte.

Im Gegensatz zu den herkömmlichen Verfahren kann eine Anpassung der Zylinderluftfüllungsberechnung (Algorithmik 15) unter verschiedenen Umgebungsluftbedingungen in individuellen Betriebspunkten durch Anpassung der Korrekturfelder im Motorsteuergerät während der Fahrzeugerprobungen entfallen. Dadurch können Entwicklungszeit und Kosten eingespart werden.

In gleichen Motorbetriebspunkten skalieren nicht nur die gemittelten Saugrohr- und Abgasgegendrücke bei verschiedenen Umgebungsdrücken linear, sondern auch das für Restgasüberströmung bzw. Scavaging entscheidende Druckverhältnis zwischen Saugrohr- und Abgasvolumen während des Zeitpunkts der Ventilüberschneidung der Ventile 41 und 47.

Dadurch reicht abgasseitig der gemittelte Abgasdruck p₃ vor dem Auslassventil 47 als Eingang zur Berechnung der Zylinderluftfüllung. Weitere Größen, wie der gemessene Umgebungsdruck pu oder bei aufgeladenen Systemen der Druck nach der Turbine entfallen im primären Modell 15 zur Zylinderluftberechnung.

**Bezugszeichenliste**

1   Berechnungsmodul
3   Eingangsmodul
5   Saugrohrdruck
7   Abgasdruck
9   Umgebungsluftdruck
11  Prozessor
13  Normumgebungsluftdruck
15  Luftfüllungsberechnungsalgorithmik
17  Skalierter Saugrohrdruck
19  Skalierter Abgasdruck
21  Normluftmenge
23  Skalierte Normluftmenge
25  Berechnungselement
29  Berechnungselement
31  Berechnungselement
33  Teil einer Verbrennungskraftmaschine
34  Motorsteuergerät
35  Zylinder
36  Zylinderwand
37  Kolben
39  Zylinderinnenraum
41  Einlassventil
43  Luft
45  Saugrohr bzw. Laderohr
47  Auslassventil
49  Abgasrohr
51  Drucksensor
53  Drucksensor
55  Zündkerze
57  Einspritzsteuersignal

**Patentansprüche**

1. Verfahren zum Bestimmen einer Luftmenge (23) innerhalb eines Zylinders (35) einer Verbrennungskraftmaschine (33), wobei das Verfahren aufweist:

   Skalieren eines Saugrohrdrucks (5, ps, p2) und eines Abgasdrucks (7, p3) in Abhängigkeit eines tatsächlichen Umgebungsluftdrucks (9, pu) und eines Normumgebungsluftdrucks (13, punorm); Durchführen einer Luftfüllungsberechnungsalgorithmik (15), welche unter einer Normumgebungsluftdruck-Betriebsbedingung erstellt ist, um eine Normluftmenge (21, mLnorm) basierend auf dem skalierten Saugrohrdruck (17) und dem skalierten Abgasdruck (19) zu bestimmen; Skalieren der Normluftmenge (21) in Abhängigkeit des tatsächlichen Umgebungsluftdrucks (9) und des Normumgebungsluftdruckes (13), um die Luftmenge (23, mL) zu berechnen.

2. Verfahren gemäß Anspruch 1, wobei das Skalieren des Saugrohrdrucks (5), des Abgasdrucks (7) und der Normluftmenge (21) ein lineares Skalieren aufweist, wobei die bei geschlossenem Lufteinlassventil im Zylinder (35) befindliche Luftmenge (23) bestimmt wird.

3. Verfahren gemäß Anspruch 1 oder 2, wobei das Skalieren des Saugrohrdrucks (p2) und des Abgasdrucks (p3) einheitlich erfolgt.

4. Verfahren gemäß einem der vorangehenden Ansprüche, wobei das Skalieren des Saugrohrdrucks (p2) Multiplizieren des Saugrohrdrucks (p2) mit einem Faktor (27, f) aufweist, wobei der Faktor (27, f) den Quotienten aus dem Normumgebungsluftdruck (13) und dem tatsächlichen Umgebungsluftdruck (9) aufweist.

5. Verfahren gemäß Anspruch 4, wobei das Skalieren der Normluftmenge (21) Multiplizieren der Normluftmenge mit dem Kehrwert (1/f) des Faktors (f) aufweist.

**6.** Verfahren gemäß einem der vorangehenden Ansprüche, wobei die Luftfüllungsberechnungsalgorithmik (15) eine oder mehrere weitere Eingangsgrößen aufweist: Positionen von füllungsbeeinflussenden Aktuatoren, eine Drehzahl der Verbrennungskraftmaschine, eine Einlassnockenposition, eine Auslassnockenposition, eine Ladungsbewegungsklappenposition, mindestens einen Ventilhub, eine Abgastemperatur, eine Luftzufuhrtemperatur, einen gemessenen oder modellierten Abgasdruck stromabwärts einer Turbine und/oder eine Umgebungstemperatur.

**7.** Verfahren gemäß einem der vorangehenden Ansprüche, wobei das Verfahren eine Phase gleichzeitiger Öffnung eines Einlassventils (41) und eines Auslassventils (47) des Zylinders unterstützt.

**8.** Verfahren gemäß einem der vorangehenden Ansprüche, wobei das Verfahren Restgasrückführung unterstützt.

**9.** Verfahren gemäß einem der vorangehenden Ansprüche, wobei das Verfahren Spülung der Restgasmenge mit Frischluft unterstützt.

**10.** Verfahren gemäß einem der vorangehenden Ansprüche, wobei die Luftfüllungsberechnungsalgorithmik (15) am Verbrennungskraftmaschinenprüfstand unter Normalbedingungen, nämlich bei Normtemperatur, über eine Mehrzahl von Betriebspunkten und füllungsbeeinflussenden Aktuatorpositionen erstellt ist.

**11.** Verfahren gemäß einem der vorangehenden Ansprüche, wobei der Saugrohrdruck (p2, ps) und der Abgasdruck (p3) jeweils mittels Druckmessungen oder Modellierungen, nämlich mittels Mittelung von Druckmessungen oder Modellierungen, in einem Saugrohr (45), insbesondere wenn ein Lufteinlassventil (41) des Zylinders geöffnet ist, bzw. in einem Abgasrohr (49), insbesondere wenn ein Abgasauslassventil (47) des Zylinders geöffnet ist, bestimmt werden.

**12.** Verfahren gemäß einem der vorangehenden Ansprüche, wobei der tatsächliche Umgebungsluftdruck (9) mittels Druckmessung, Höhenmessung und/oder Erhalten von entfernt bestimmten meteorologischen Daten erhalten ist.

**13.** Verfahren zum Steuern einer Verbrennungskraftmaschine (33) mit mindestens einem Zylinder (35), wobei das Verfahren aufweist:

Durchführen eines Verfahrens zum Bestimmen einer Luftmenge (23, mL) innerhalb des Zylinders gemäß einem der vorangehenden Ansprüche; und
Zuführen von Kraftstoff in den Zylinder (35), wobei eine Menge des Kraftstoffs basierend auf der bestimmten Luftmenge (21, mL) gewählt ist.

**14.** Motorsteuergerät (34), aufweisend:

ein Eingabemodul (3), welches ausgebildet ist, zumindest einen Saugrohrdruck (p2,ps) und einen Abgasdruck (p3) eines Zylinders (35) einer Verbrennungskraftmaschine (33) und einen tatsächlichen Umgebungsluftdruck (pu) zu erhalten; und
einen Prozessor (11), welcher ausgebildet ist, den Saugrohrdruck (p2, ps) und den Abgasdruck (p3) in Abhängigkeit des tatsächlichen Umgebungsluftdrucks (pu) und eines Normumgebungsluftdrucks (punorm) zu skalieren, eine Luftfüllungsberechnungsalgorithmik (15) durchzuführen, welche unter einer Normumgebungsluftdruck-Betriebsbedingung erstellt ist, um eine Normluftmenge (21, mLnorm) basierend auf dem skalierten Saugrohrdruck und dem skalierten Abgasdruck zu bestimmen, die Normluftmenge in Abhängigkeit des tatsächlichen Umgebungsluftdrucks und des Normumgebungsluftdruckes zu skalieren, um eine Luftmenge (23, mL) innerhalb des Zylinders zu bestimmen, und eine Menge von in den Zylinder einzuführendem Kraftstoff basierend auf der bestimmten Luftmenge (23, mL) zu bestimmen.

**15.** Verbrennungskraftmaschine (33), aufweisend:

mindestens einen Zylinder (35) mit einem Saugrohr (45) und einem Abgasrohr (49); und
ein Motorsteuergerät (34) gemäß Anspruch 14.

**Claims**

**1.** Method for determining an air quantity (23) within a cylinder (35) of an internal combustion engine (33), wherein the method features:

scaling an intake manifold pressure (5, ps, p2) and an exhaust gas pressure (7, p3) depending on an actual ambient air pressure (9, pu) and a standard ambient air pressure (13, punorm); implementing an air charge calculation algorithm (15), which was created under a standard ambient air pressure operating condition, in order to determine a standard air quantity (21, mLnorm) based on the scaled intake manifold pressure (17) and the scaled exhaust gas pressure (19); scaling the standard air quantity (21) depending on the actual ambient air pressure (9) and the standard ambient air pressure (13), in order to calculate the air quantity (23, mL).

2.  Method according to claim 1, wherein the scaling of the intake manifold pressure (5), of the exhaust gas pressure (7), and of the standard air quantity (21) features linear scaling, wherein the air quantity (23) present in the cylinder (35) when the air intake valve is closed is determined.

3.  Method according to claim 1 or 2, wherein the scaling of the intake manifold pressure (p2) and of the exhaust gas pressure (p3) occurs uniformly.

4.  Method according to one of the preceding claims, wherein the scaling of the intake manifold pressure (p2) includes multiplying the intake manifold pressure (p2) by a factor (27, f), wherein the factor (27, f) includes the quotient of the standard ambient air pressure (13) and the actual ambient air pressure (9).

5.  Method according to claim 4, wherein the scaling of the standard air quantity (21) includes multiplying the standard air quantity by the reciprocal value (1/f) of the factor (f).

6.  Method according to one of the preceding claims, wherein the air charge calculation algorithm (15) has one or more further input variables: positions of charge-influencing actuators, a rotational speed of the internal combustion engine, an intake cam position, an exhaust cam position, a charge motion flap position, at least one valve lift, an exhaust gas temperature, an air supply temperature, a measured or modeled exhaust gas pressure downstream of a turbine, and/or an ambient temperature.

7.  Method according to one of the preceding claims, wherein the method supports a phase of simultaneous opening of an intake valve (41) and an exhaust valve (47) of the cylinder.

8.  Method according to one of the preceding claims, wherein the method supports residual gas recirculation.

9.  Method according to one of the preceding claims, wherein the method supports purging of the residual gas quantity with fresh air.

10. Method according to one of the preceding claims, wherein the air charge calculation algorithm (15) is created at the internal combustion engine test stand under standard conditions, namely at standard temperature, over a plurality of operating points and charge-influencing actuator positions.

11. Method according to one of the preceding claims, wherein the intake manifold pressure (p2, ps) and the exhaust gas pressure (p3) are respectively determined by means of pressure measurements or modelings, namely by means of averaging pressure measurements or modelings, in an intake manifold (45), especially when an air intake valve (41) of the cylinder is open; or in an exhaust gas pipe (49), especially when an exhaust gas outlet valve (47) of the cylinder is open.

12. Method according to one of the preceding claims, wherein the actual ambient air pressure (9) is obtained by means of pressure measurement, elevation measurement, and/or obtaining remotely-determined meteorological data.

13. Method for controlling an internal combustion engine (33) having at least one cylinder (35), wherein the method features:

    implementing a method for determining an air quantity (23, mL) within the cylinder according to one of the preceding claims; and
    supplying fuel into the cylinder (35), wherein a quantity of the fuel is selected on the basis of the determined air quantity (21, mL).

14. Engine control unit (34), having:

    an input module (3) which is designed to obtain at least one intake manifold pressure (p2, ps) and an exhaust gas pressure (p3) of a cylinder (35) of an internal combustion engine (33), and an actual ambient air pressure (pu); and
    a processor (11) which is designed to scale the intake manifold pressure (p2, ps) and the exhaust gas pressure (p3) depending on the actual ambient air pressure (pu) and a standard ambient air pressure (punorm),
    implement an air charge calculation algorithm (15), created under a standard ambient air pressure operating condition, in order to determine a standard air quantity (21, mLnorm) based upon the scaled intake manifold pressure and the scaled exhaust gas pressure,
    scale the standard air quantity depending on the actual ambient air pressure and the standard ambient air pressure, in order to determine an air quantity (23, mL) within the cylinder; and
    determine an amount of fuel to be introduced into the cylinder, based upon the determined air quantity (23, mL).

15. Internal combustion engine (33) having:

    at least one cylinder (35) with an intake manifold (45) and an exhaust gas pipe (49); and

an engine control unit (34) according to claim 14.

## Revendications

1. Procédé de détermination d'une quantité d'air (23) à l'intérieur d'un cylindre (35) d'un moteur à combustion interne (33), le procédé consistant à :

   ajuster une pression de tubulure d'admission (5, ps, p2) et une pression de gaz d'échappement (7, p3) en fonction d'une pression d'air ambiant réelle (9, pu) et d'une pression d'air ambiant standard (13, punorm) ;
   exécuter un algorithme de calcul de remplissage d'air (15), qui est établi dans une condition de fonctionnement à pression d'air ambiant standard pour déterminer une quantité d'air standard (21, mLnorm) sur la base de la pression de tubulure d'admission ajustée (17) et de la pression de gaz d'échappement ajustée (19) ;
   ajuster la quantité d'air standard (21) en fonction de la pression d'air ambiant réelle (9) et de la pression d'air ambiant standard (13) pour calculer la quantité d'air (23, mL).

2. Procédé selon la revendication 1, dans lequel l'ajustement de la pression de tubulure d'admission (5), de la pression de gaz d'échappement (7) et de la quantité d'air standard (21) comporte un ajustement linéaire, la quantité d'air (23) se trouvant dans le cylindre (35) lorsque la soupape d'admission d'air est fermée étant déterminée.

3. Procédé selon la revendication 1 ou 2, dans lequel l'ajustement de la pression de tubulure d'admission (p2) et de la pression de gaz d'échappement (p3) est effectué de manière uniforme.

4. Procédé selon l'une quelconque des revendications précédentes, dans lequel l'ajustement de la pression de tubulure d'admission (p2) comporte la multiplication de la pression de tubulure d'admission (p2) par un facteur (27, f), le facteur (27, f) comportant le quotient de la pression d'air ambiant standard (13) par la pression d'air ambiant réelle (9).

5. Procédé selon la revendication 4, dans lequel l'ajustement de la quantité d'air standard (21) comporte la multiplication de la quantité d'air standard par la valeur inverse (1/f) du facteur (f).

6. Procédé selon l'une quelconque des revendications précédentes, dans lequel l'algorithme de calcul de remplissage d'air (15) comporte une ou plusieurs autres grandeurs d'entrée : des positions d'actionneurs ayant une influence sur le remplissage, un régime du moteur à combustion interne, une position de came d'admission, une position de came d'échappement, une position de volet de turbulence, au moins une course de soupape, une température de gaz d'échappement, une température d'admission d'air, une pression de gaz d'échappement mesurée ou modélisée en aval d'une turbine et/ou une température ambiante.

7. Procédé selon l'une quelconque des revendications précédentes, dans lequel le procédé favorise une phase d'ouverture simultanée d'une soupape d'admission (41) et d'une soupape d'échappement (47) du cylindre.

8. Procédé selon l'une quelconque des revendications précédentes, dans lequel le procédé favorise le recyclage des gaz résiduels.

9. Procédé selon l'une quelconque des revendications précédentes, dans lequel le procédé favorise le balayage de la quantité résiduelle de gaz avec de l'air extérieur.

10. Procédé selon l'une quelconque des revendications précédentes, dans lequel l'algorithme de calcul de remplissage d'air (15) est établi sur le banc d'essai du moteur à combustion interne dans des conditions normales, c'est-à-dire à une température standard, sur une pluralité de points de fonctionnement et de positions d'actionneurs ayant une influence sur le remplissage.

11. Procédé selon l'une quelconque des revendications précédentes, dans lequel la pression de tubulure d'admission (p2, ps) et la pression de gaz d'échappement (p3) sont déterminées respectivement au moyen de mesures de pression ou de modélisations, c'est-à-dire au moyen du calcul de la moyenne de mesures de pression ou de modélisations, dans une tubulure d'admission (45), en particulier quand une soupape d'admission d'air (41) du cylindre est ouverte, ou dans un tuyau d'échappement (49), en particulier quand une soupape d'échappement de gaz (47) du cylindre est ouverte.

12. Procédé selon l'une quelconque des revendications précédentes, dans lequel la pression d'air ambiant réelle (9) est obtenue au moyen d'une mesure de pression, d'une mesure de l'altitude et/ou par l'obtention de données météorologiques déterminées à distance.

13. Procédé de commande d'un moteur à combustion interne (33) comprenant au moins un cylindre (35), le procédé consistant à :

   exécuter un procédé de détermination d'une quantité d'air (23, mL) à l'intérieur du cylindre selon l'une quelconque des revendications précédentes ; et
alimenter du carburant dans le cylindre (35), une quantité du carburant étant choisie en fonction de la quantité d'air (21, mL) déterminée.

14. Dispositif de commande de moteur (34) comportant :

un module de saisie (3), qui est conçu pour obtenir au moins une pression de tubulure d'admission (p2, ps) et une pression de gaz d'échappement (p3) d'un cylindre (35) d'un moteur à combustion interne (33) et une pression d'air ambiant réelle (pu) ; et
un processeur (11), qui est conçu pour ajuster la pression de tubulure d'admission (p2, ps) et la pression de gaz d'échappement (p3) en fonction de la pression d'air ambiant réelle (pu) et d'une pression d'air ambiant standard (punorm),
exécuter un algorithme de calcul de remplissage d'air (15), qui est établi dans une condition de fonctionnement à pression d'air ambiant standard pour déterminer une quantité d'air standard (21, mLnorm) sur la base de la pression de tubulure d'admission ajustée et de la pression de gaz d'échappement ajustée,
ajuster la quantité d'air standard en fonction de la pression d'air ambiant réelle et de la pression d'air ambiant standard pour déterminer une quantité d'air (23, mL) à l'intérieur du cylindre, et
déterminer une quantité de carburant à introduire dans le cylindre en fonction de la quantité d'air (23, mL) déterminée.

15. Moteur à combustion interne (33) comportant :

au moins un cylindre (35) doté d'une tubulure d'admission (45) et d'un tuyau d'échappement (49) ; et
un dispositif de commande de moteur (34) selon la revendication 14.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004030604 B3
- DE 102007012340 B3
- DE 102007012506 A1
- DE 102008042819 A1
- DE 102004041708 A1